# EUROPEAN PATENT APPLICATION

(11) **EP 1 887 803 A1**
(43) Date of publication of application: **13.02.2008**
(21) Application number: 07114003.2
(22) Date of filing: 08.08.2007
(51) Int. Cl.: H04N 7/24, H04N 5/445

(54) **System and method for transmitting / receiving ESG data update information in DVB-H system**

(30) Priority: 08.08.2006 KR 20060074937
(71) Applicant: Samsung Electronics Co., Ltd., Suwon-si, Gyeonggi-Do (KR)
(72) Inventor: Jung, Ji-Wuck c/o Samsung Electronics Co., Ltd., Suwon-si, Gyeonggi-do (KR); Kim, Hyun-Chul c/o Samsung Electronics Co., Ltd., Suwon-si, Gyeonggi-do (KR); Kim, Young-Jip c/o Samsung Electronics Co., Ltd., Suwon-si, Gyeonggi-do (KR); Lee, Kyung-Shin c/o Samsung Electronics Co., Ltd., Suwon-si, Gyeonggi-do (KR)
(74) Representative: Grünecker, Kinkeldey, Stockmair & Schwanhäusser Anwaltssozietät

(57) **Abstract**

Disclosed is a system and a method for transmitting/receiving update information of Electronic Service Guide (ESG) data in a Digital Video Broadcasting-Handheld (DVB-H) system. For this, the system for transmitting/receiving the update information includes a DVB-H system for detecting the version of the ESG data which is to be transmitted, for inserting the version information of the ESG data in a predetermined table among tables constructing Program Specific Information/Service Information (PSI/SI) data, and for transmitting the version information of the ESG data included in the predetermined table; and a DVB-H receiving terminal for receiving PSI/SI data and then analyzing the received PSI/SI data to detect the version of the ESG data from the analyzed PSI/SI data, for comparing the detected version of the ESG data with version information of ESG data detected from PSI/SI, which has been already received, in order to check if the two versions accord with each other, and for making connection with a transmission channel of the ESG data if the two versions do not accord with each other, to receive the ESG data, and then to update the received ESG data.

## Description

The present invention relates to a Digital Video Broadcasting-Handheld (DVB-H) system, and more particularly to a system and a method for efficiently informing a user of the version of Electronic Service Guide (ESG) data that transfers information on broadcasting services, through a mobile broadcasting terminal.

It is expected that the rapid growth of mobile digital broadcasting will continue. There are various kinds of standards for the mobile digital broadcasting, among which three standards are widely used all over the world. One of them is Digital Multimedia Broadcasting (DMB), which has been adopted in Korea as a standard of mobile broadcasting. The second one is DVB-H. The third one is Media Forward Link Only (MediaFLO) technology, which has been developed by Qualcomm Inc. of USA.

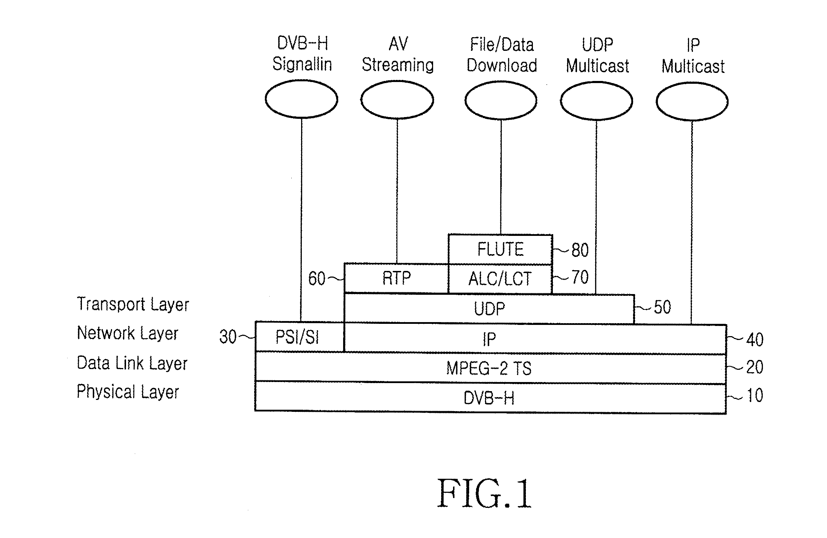

Among the above-stated standards, DVB-H mobile broadcasting standards are based on Digital Video Broadcasting (DVB), which corresponds to standards of the existing European digital broadcasting, and also correspond to standards of mobile broadcasting, which are configured on the basis of the Moving Picture Experts Group-2 (MPEG-2) system. FIG. 1 shows the protocol stack of a DVB-H system. With reference to FIG. 1, the protocol stack of the DVB-H system includes the DVB-H transport protocol 10, the MPEG-2 Transport Stream (TS) protocol 20, the Internet Protocol (IP) 40, the Program Specific Information/Service Information (PSI/SI) protocol 30, the User Datagram Protocol (UDP) 50, the Realtime Transport Protocol (RTP) 60, Asynchronous Layered Coding/Layered Coding Transport (ALC/LCT) protocol 70, and File deLivery over Unidirectional Transport (FLUTE) protocol 80. The protocol stack of the DVB-H system has the characteristic such that all other data except for DVB-H signaling corresponding to PSI/SI information are transmitted through the IP 40. Namely, all data, including audio service, video service, etc., transmitted through the DVB-H system, are transmitted in the form of an IP packet, as swell as a file download service.

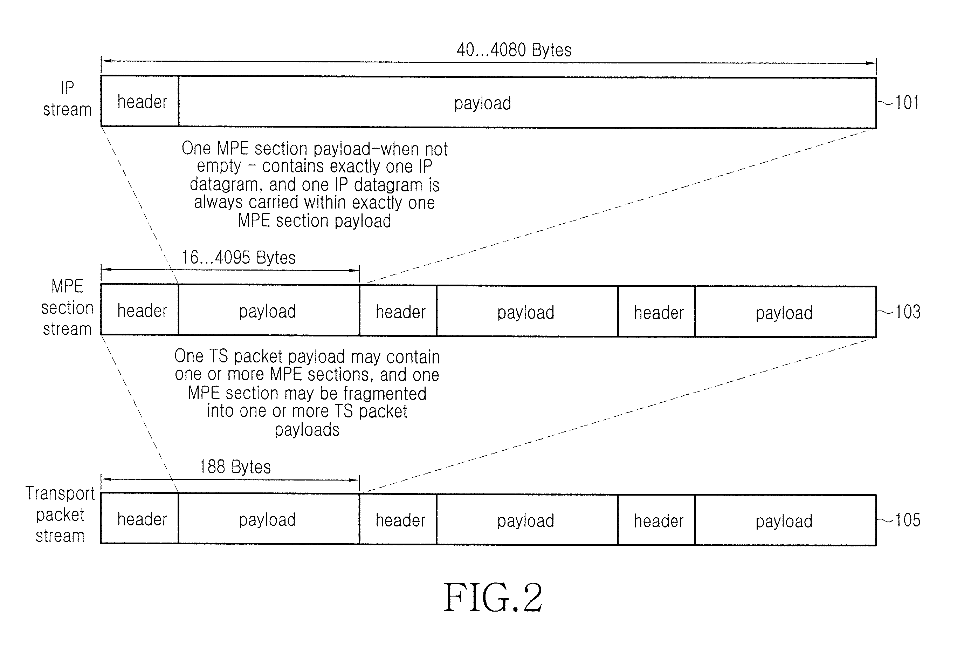

In compliance with DVB-H, Video and audio data are transmitted/received by using the RTP 60 corresponding to the upper protocol of the IP 40, and files/data are transmitted/received by using the FLUTE protocol 80 located at the highest layer, as compared with the IP 40. In order to be carried on an MPEG-2 system, these IP packets are encapsulated in the form of Multi-Protocol Encapsulation (MPE) and are then transmitted. This process is illustrated in FIG. 2. FIG. 2 shows the process of the IP-packet MPE encapsulation. With reference to FIG. 2, an IP packet of an IP stream 101 is encapsulated in a MPE section stream 103, and is carried on MPEG TS 105 corresponding to a transport packet stream.

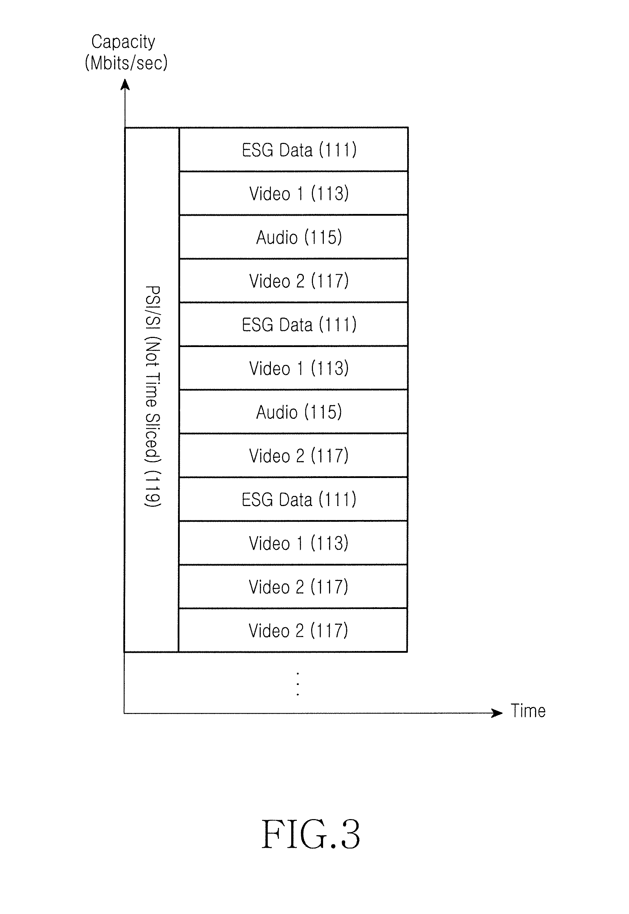

DVB-H has another characteristic such that broadcasting data is transferred by using a unique scheme called "time slicing." The time slicing is a scheme in which each data is transferred during a specified time slot when various types of data are multiplexed to be carried on one MPEG TS 105. For instance, when a slice of video data and a slice of audio data are multiplexed to be carried on the MPEG TS 105, the video data is transferred during the time interval of 0 to 1 [second], then the audio data is transferred during the time interval of 1 to 2 [second], and next, transmission of the video data, which has been performed during the time interval of 0 to 1 [second], is reopened during the time interval of 2 to 3 [second]. With the transmission in this way, a terminal that receives the MPEG TS 105 receives only the data during time intervals 0 to 1 [second], 2 to 3 [second] and 4 to 5 [second] while reproducing the video signal, decodes the received data, and next, can output the video data. The reason time slicing is applied to the DVB-H system is battery resources of the terminal; because, the terminal of the DVB-H may be a mobile terminal supplied with power from a battery. Therefore, while receiving broadcasting, minimizing power consumption can be an essential technology. If a variety of services are transferred using time slicing, the terminal receives data only for a time interval during which the data offered for the purpose of services is transmitted, decodes the received data, and next, enters a sleep state when not receiving data. As a result, power consumption can be reduced. FIG. 3 shows a DVB-H data transfer model using time slicing. With reference to FIG. 3, ESG data 111, video 1 data 113, audio data 115, and video 2 data 117 can be sequentially transferred during the allocated time slots. DVB-H signaling information is transferred not in the scheme of time slicing, but all over the time domain.

Lastly, another characteristic of the DVB-H system is the use of ESG data. ESG data corresponds to extensible Markup Language (XML) file that has information on broadcasting services sent through the DVB-H system. The DVB-H system informs users of the kinds of broadcasting services and of a diversity of information required to receive the broadcasting services {e.g., an Internet Protocol (IP) platform Identifier (ID), an IP address, information on paid services, etc.} by using this ESG data. Hence, the ESG data should be received earlier in order to be analyzed before the broadcasting services including video, audio, data, etc., are received. Moreover, since an update can occur in this ESG data in the middle of the services, the latest data can be maintained by periodically checking if the update did occur.

A major role which the information of PSI/SI plays in the DVB-H system is to perform signaling with respect to data that comes into an MPEG TS, and information which accords with an IP address. In this manner, related IP data can come to be received by using the IP addresses, and by mapping between the IP address of the broadcasting services of the ESG and a Program ID (PID) of the MPEG TS, which is actually received. Information on DVB-T and DVB-S broadcasting services is also transferred while carrying PSI/SI data, information related to broadcasting is not actually transferred in the DVB-H, for most of the information related to broadcasting is included in the ESG.

The PSI/SI data should be also monitored throughout reception of the services. This is why a change should be reflected, if signaling information related to the DVB-H changes. Consequently, it is usual that the PSI/SI does not transfer data using time slicing but is spread all over the time domain so that it may be decoded during any time slot.

As examined in the prior art, the DVB-H terminal analyzes the ESG data in order to perform the broadcasting services in the DVB-H system. Moreover, while the services are being received, the latest data can be maintained by periodically checking for any update. Yet, the ESG data is also transferred through IP 40, and is transferred using time slicing as the ESG data is carried during a specific time slot, as illustrated in FIG. 2. Referring to FIG 1, a protocol through which the ESG data is transferred is located higher than the FLUTE protocol 80, which corresponds to a file download protocol.

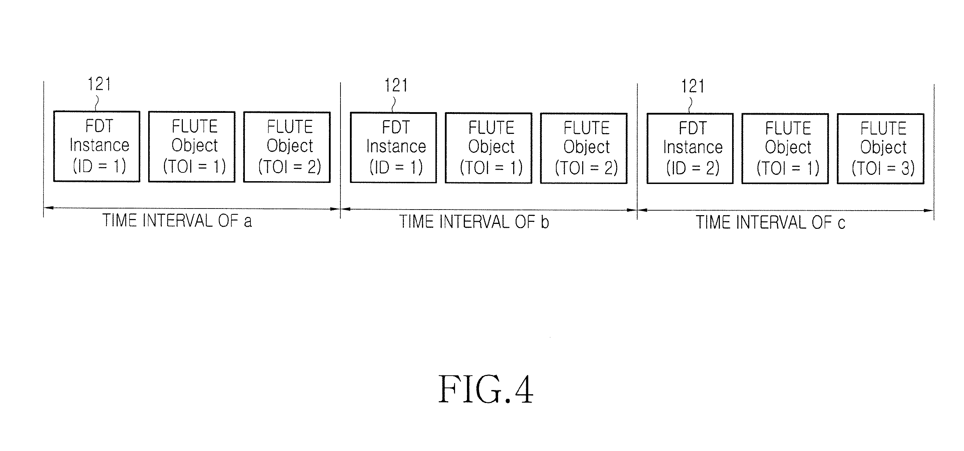

To maintain the ESG data as the newest in the DVB-H terminal, ESG data update should be periodically checked using the FLUTE protocol 80, after awaking from a time slot into which the ESG data enters as it is received. The FLUTE protocol 80 transmits information on whether a file, which is being transferred, has been updated by using XML data called "Formal Description Technique (FDT) instance." This is illustrated in FIG. 4. FIG. 4 shows the FLUTE protocol data transmission concept. With reference to FIG. 4, in order to perceive whether the ESG data has been updated, a second FDT instance 121 is received above all during a time slot for which the ESG data is received, and is compared with a first FDT instance, which has been already received. If the ID of the first FDT instance that has been already received and stored is different from the ID of the second FDT instance, which is currently received, the ESG data is updated. In FIG. 4, during the first time interval 'a,' and during a second time interval 'b,' the ID of the first FDT instance is the same as the ID of the second FDT instance. However, since the ID of the third FDT instance is changed to 2 during a third time interval 'c,' the ESG data is updated during the third time interval 'c.' In order to merely check if the FSG data has been updated, an FDT instance should be received and analyzed after awaking from a time slot domain during which the ESG data is always received. As a result, checking the update of the ESG data causes a large amount of power to be consumed.

Accordingly, the present invention has been made to solve the above problems occurring in the prior art. It is the object of the present invention to provide a system and a method in which ESG data can be updated by efficiently checking the version of the ESG data, as power consumption of a DVB-H terminal is reduced.

This object is solved by the subject matter of the independent claims.

Preferred embodiments are defined by the subject matter of the dependent claims.

In order to accomplish the above, there is provided a method for transmitting update information of Electronic Service Guide (ESG) data in a Digital Video Broadcasting-Handheld (DVB-H) system according to an embodiment of the present invention, including detecting the version of the ESG data which is to be transmitted; and inserting the version information of the ESG data in a predetermined table among tables constructing Program Specific Information/Service Information (PSI/SI), and transmitting the version of the ESG data included in the predetermined table.

In order to accomplish the above, there is provided a method for receiving update information of Electronic Service Guide (ESG) data in a Digital Video Broadcasting-Handheld (DVB-H) system according to an embodiment of the present invention, including receiving PSI/SI data; analyzing the received PSI/SI data, and detecting the version of the ESG data from the analyzed PSI/SI data; comparing the detected version of the ESG data with version of ESG data detected from PSI/SI, which has been already received, in order to check if the two versions are in accord with each other; and making connection with a transmission channel of the ESG data if the two versions are not in accord with each other; receiving the ESG data, and updating the received ESG data.

In order to accomplish the above aspects, there is provided a system for transmitting/receiving update information of the Electronic Service Guide (ESG) data in a Digital Video Broadcasting-Handheld (DVB-H) system including a DVB-H system for detecting version of the ESG data which is to be transmitted, for inserting the version information of the ESG data in a predetermined table among tables constructing Program Specific Information/Service Information (PSI/SI) data, and for transmitting the version of the ESG data included in the predetermined table; and a DVB-H receiving terminal for receiving PSI/SI data and then analyzing the received PSI/SI data to detect the version of the ESG data from the analyzed PSI/SI data, for comparing the detected version of the ESG data with version of ESG data detected from PSI/SI, which has been already received, in order to check if the two versions are in accord with each other, and for making connection with a transmission channel of the ESG data if the two versions are not in accord with each other, to receive the ESG data, and then to update the received ESG data.

The present invention will be more apparent from the following detailed description taken in conjunction with the accompanying drawings, in which:
FIG. 1 shows the protocol stack of a DVB-H system;
FIG. 2 shows a process of the IP-packet MPE encapsulation;
FIG. 3 shows a DVB-H data transfer using time slicing;
FIG. 4 shows data transmission using the FLUTE protocol;
FIG. 5 is a block diagram illustrating a configuration of a DVB-H receiving terminal according to the present invention;
FIG. 6 illustrates configuration information of DVB-H PSI/SI;
FIG. 7 illustrates an information analyzing process of the DVB-H PSI/SI according to the present invention;

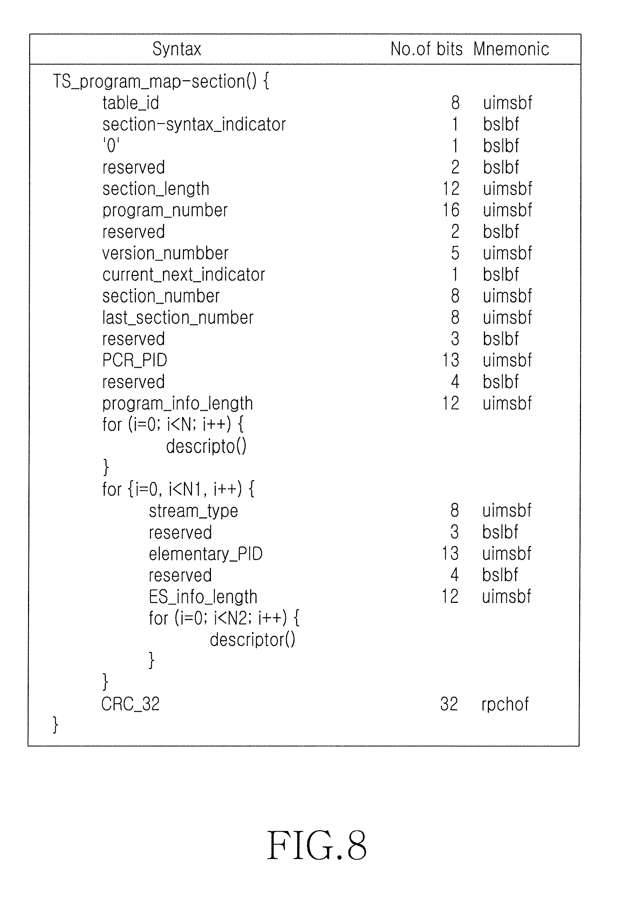

FIG. 8 shows the structure of a Program Map Table (PMT) according to the present invention;
FIG. 9 shows the structure of data_broadcast_id_descriptor() according to the present invention;
FIG. 10 shows the structure of IP/MAC_notification_info( ) according to the present invention;
FIG. 11 shows the structure of ESG_version_info( ) according to the present invention; and
FIG. 12 is a flowchart for a process for updating ESG information by a DVB-H receiving terminal according to the present invention.

Preferred embodiments of the present invention will be described with reference to the accompanying drawings. The same elements will be designated by the same reference numerals throughout the following description and drawings although they are shown in different drawings. Further, in the following description of the present invention, detailed description of known functions and configurations incorporated herein will be omitted when it may make the subject matter of the present invention rather unclear.

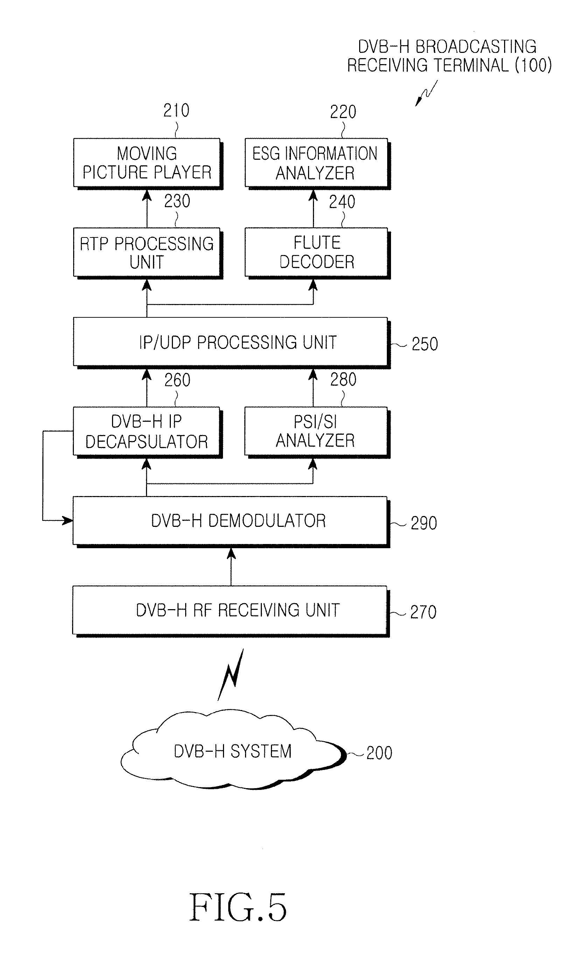

First, with reference to FIG. 5, a DVB-H broadcasting receiving terminal 100 of the present invention will be described as follows.. The DVB-H broadcasting receiving terminal includes a moving picture player 210, an ESG information analyzer 220, a Rapid Transport Protocol (RTP) processing unit 230, a FLUTE decoder 240, an Internet Protocol/User Datagram Protocol (IP/UDP) processing unit 250, a DVB-H decapsulator 260, a PSI/SI analyzer 280, a DVB-H demodulator 290, and a DVB-H Radio Frequency (RF) receiving unit 270.

DVB-H RF receiving unit 270 receives a DVB-H signal from a DVB-H system 200, and provides the received DVB-H signal to DVB-H demodulator 290. DVB-H demodulator 290 analyzes the MPEG-2 transport stream, and provides an analyzed MPEG-2 transport stream to DVB-H decapsulator 260 and PSI/SI analyzer 280. DVB-H decapsulator 260 decapsulates MPE section data to acquire an IP packet, and provides the acquired IP packet to the IP/UDP processing unit 250. The PSI/SI analyzer 280 analyzes the PSI/SI information. IP/UDP processing unit 250 processes received IP packets, and outputs the processed IP packets to the RTP processing unit 230 and FLUTE decoder 240. FLUTE decoder 240 detects transport data, such as ESG data, etc., from the received IP packets, and outputs the detected transport data to ESG information analyzer 220. ESG information analyzer 220 analyzes ESG data provided from FLUTE decoder 240 to extract information necessary for broadcasting services from the analyzed ESG data. RTP processing unit 230 processes the received IP packets to provide a processed IP packets to moving picture player 210, and moving picture player 210 reproduces the input RTP-processed IP packets to output reproduced RTP-processed IP packets.

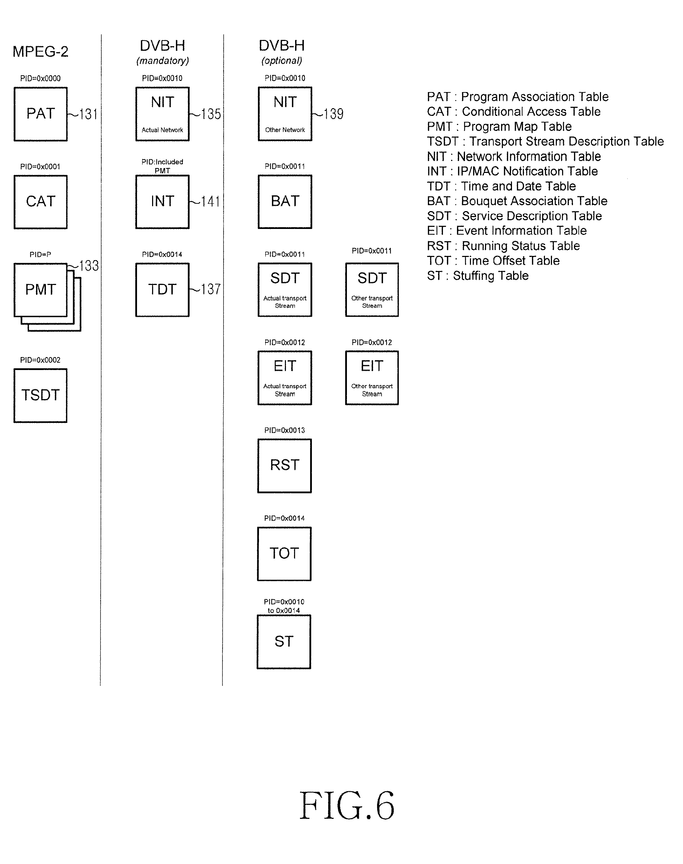

Meanwhile, DVB-H system 200 transmits PSI/SI data, configured as in FIG. 6, for signaling. Referring to FIG. 6, an essential table information which should be necessarily included in the PSI/SI data of the DVB-H to be transmitted, includes a Program Association Table (PAT) 131, a Program Map Table (PMT) 133, a Network Information Table (NIT) 135, IP/MAC Notification Table (INT) 141, and a Time and Date Table (TDT) 137. PAT 131 and PMT 133 are tables which include PID information necessary to demultiplex information, which is multiplexed in order to come into an MPEG-2 system. The NIT 135 is a table which includes broadcasting network information of an MPEG-2 stream, and the INT 141 is a table in which PID information required to demultiplex services transmitted by using IP accords, is accorded with each IP address. TDT 137 is a table which includes information on times to which broadcasting stream refers. A Service Description Table (SDT) which includes information on the broadcasting services, and a Event Information Table which includes information on broadcasting program times, are included as the remaining options.

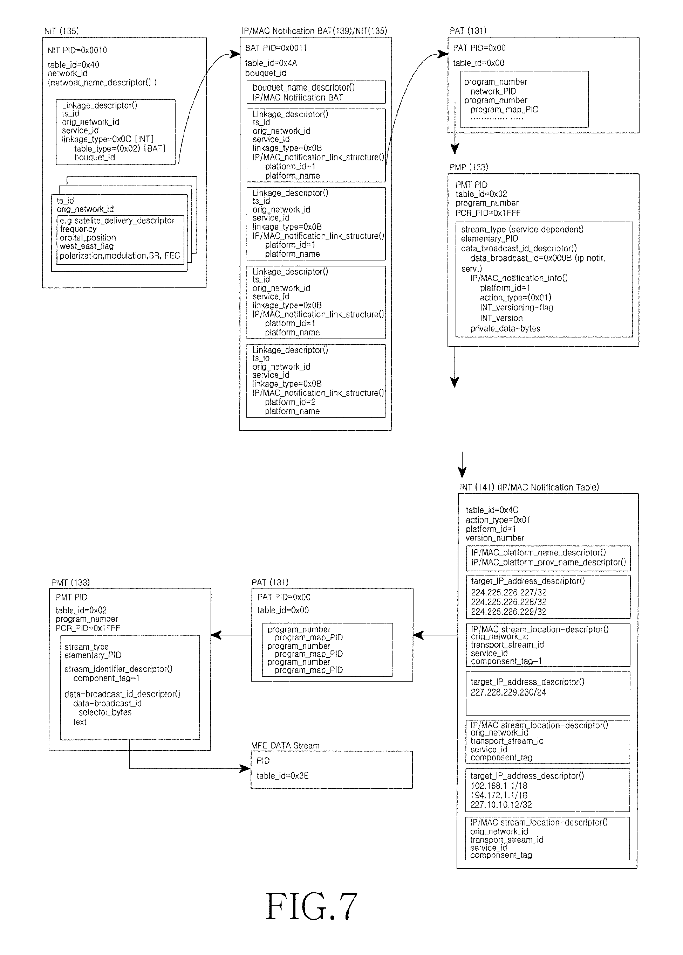

With reference to FIG. 7, a process through which the DVB-H broadcasting receiving terminal 100 analyzes the PSI/SI data configured as described above will be described as follows. Since all data of DVB-H services are configured as IP data, DVB-H broadcasting receiving terminal 100 detects INT 141 related to a relevant IP platform after the DVB-H broadcasting receiving terminal 100 has obtained from the PSI/SI, IP platform information whose service is currently available. Then, DVB-H broadcasting receiving terminal 100 detects, from detected INT 141, IP data whose services are offered by the IP platform, and information required to extract data from MPEG-2 transport stream. To sequentially examine this process with reference to FIG. 7, PSI/SI analyzer 280 of DVB-H broadcasting receiving terminal 100 detects NIT 135 first of all to obtain the MPEG stream information of the broadcasting network . Thereafter, PSI/SI analyzer 280 analyzes NIT 135 or Bouquet Association Table (BAT) 139 to obtain information of the IP platform included in the broadcasting network. The IP platform becomes a unit of broadcasting services, which broadcasters offer. The information of the IP platform includes a service ID, an IP platform ID, and a name of platform, etc. Next, if information whose IDs are matched is detected in PAT 131 by using a service ID, PID information which enables PMT 133 related to the service ID to be sought, is now able to be acquired. If PMT 133 is detected from the PSI/SI information by using PID information, a data_broadcast_id_descriptor( ), which enables a position of the INT related to an IP platform service can be sought. The PID information of transport stream packets that INT 141 of a relevant IP platform is received, and version of INT 141, are set in the data_broadcast_id_descriptor( ). INT 141 can be detected by using this PID information, and information on IP addresses whose services are offered by the IP platform, can now be obtained by analyzing INT 141.

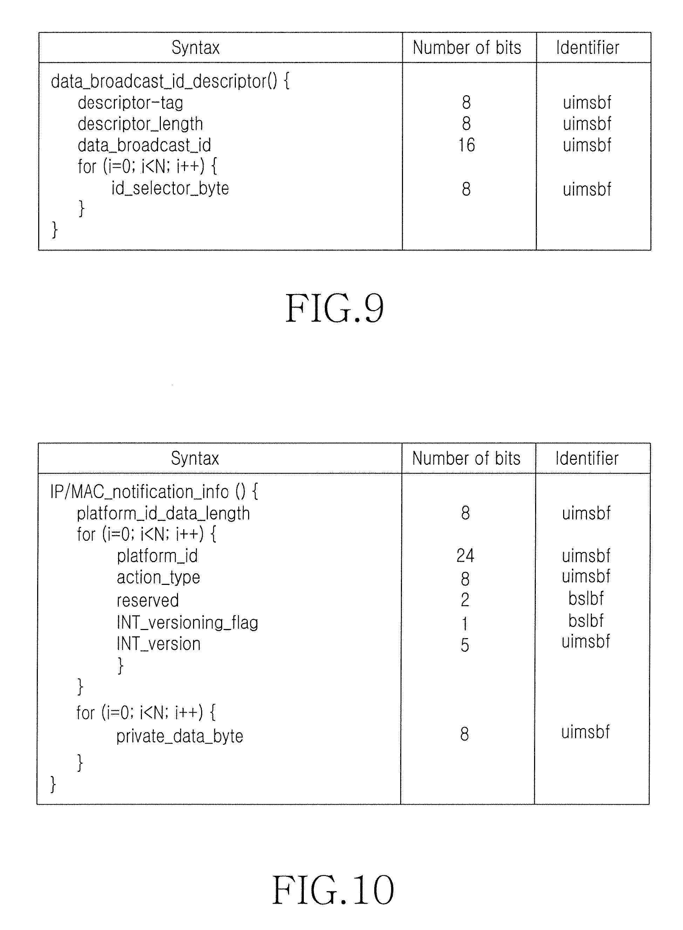

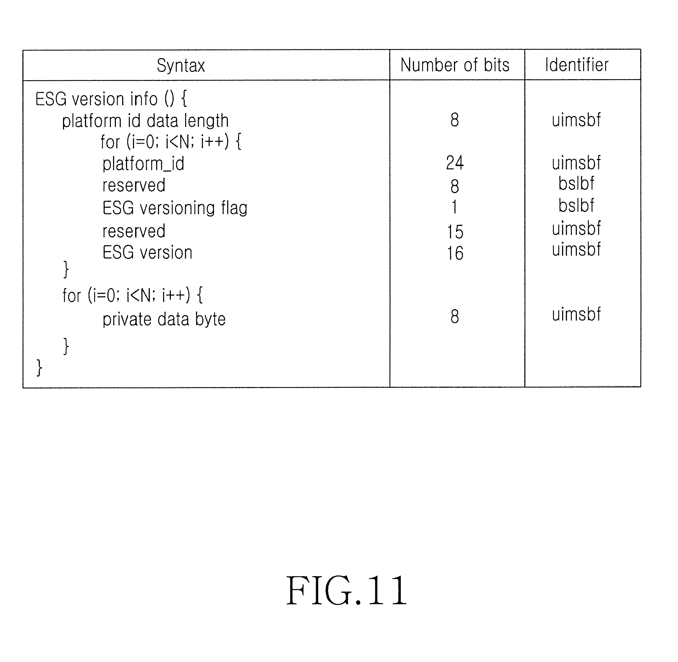

ESG data corresponds to XML data describing information on broadcasting services offered as services in the IP platform. Accordingly, when signaling of the version of the ESG data is attempted, the signaling will be accomplished by the IP platform. Even though there may exist various methods for performing the signaling of the version of ESG data in the PSI/SI, one method will be described as an example among the methods in the present invention. In the course of the process for analyzing PSI/SI data, shown in FIG. 7, it has been aforementioned that a part which would be finally detected in INT 141 corresponds to PMT 133. Information on INT 141, related to a specified platform, is described in data_broadcast_id_descriptor( ) of PMT 133. The data_broadcast_id_descriptor( ) is included in part of the description having the structure of PMT 133, and whether to include the data_broadcast_id_descriptor( ) can be distinguished through data_broadcast_id. ID of the data_broadcast_id_descriptor( ) is set to 0x000B. INT 141 is transferred by using id_selector_byte included in the data_broadcast_id_descriptor( ), and FIG. 10 illustrates the structure of IP/MAC_notification_info( ), which describes information on INT 141 according to a preferred embodiment of the present invention. It can be confirmed that an ID of the IP platform, which belongs to INT 141 and the version of INT 141 are provided by IP_notification_info( ). In the present invention, the method for adding a field required to inform the data_broadcast_id_descriptor() of the ESG version, called "ESG_verion_info()," is presented as one of the methods for performing the signaling of the version of ESG data in the PSI/SI data. is a view illustrating the structure of the ESG_version_info( ) according to a preferred embodiment of the present invention. Referring to FIG. 11, since PMT 133 is always being monitored, while monitoring the PSI/SI data in the case where the ESG version is changed, if the ESG_version_info( ) included in PMT 133 is informed of a changed version, the DVB-H receiving terminal is now able to recognize the change of the ESG version through monitoring of the PSI/SI data.

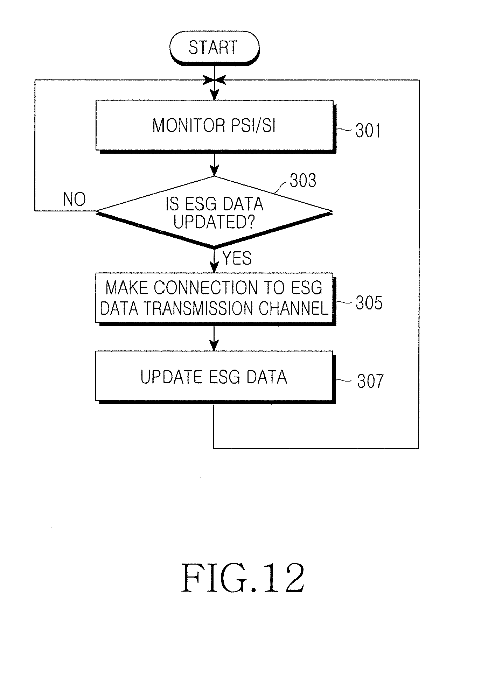

FIG. 12 is a flowchart of DVB-H receiving terminal 100 updating ESG data after monitoring the PSI/SI data configured as aforementioned, and for checking the ESG version, according to a preferred embodiment of the present invention. In step 301, DVB-H receiving terminal 100 monitors the PSI/SI data while receiving the DVB-H services. In step 303, DVB-H receiving terminal 100 continues to check the ESG_version_info( ) included in PMT 133. If there exists a change of the ESG version denoted by the ESG_version_info( ), DVB-H receiving terminal 100 is connected to a channel, over which the ESG data is transmitted in step 305, and updates the ESG data in step 307. If in an existing case when the ESG version is not included in the PSI/SI, in order to check if the ESG version is updated, DVB-H receiving terminal 100 should be continually connected to the ESG channel. Because a state of the continual connection means that DVB-H receiving terminal 100 should be awakened even during a time slot for which the ESG data is transferred, power consumption of the terminal increases, and the task that checks if the ESG version is updated is additionally required, for the DVB-H receiving terminal 100 should input an FDT instance to check the input FDT one by one. However, as illustrated in FIG. 12, since there is no need to access to the ESG data transmission channel while checking if the ESG version is updated, power consumption can be reduced by that amount.

Since there is no need to continue to be connected to the ESG data transmission channel in order to ascertain if the ESG data is updated, and the various units including the FLUTE decoder, the ESG analyzer, etc., need not operate, power consumption is reduced. Moreover, a task required to update the ESG data can be minimized, and therefore, it is possible to increase the operating speed of the DVB-H receiving terminal.

Although preferred embodiments of the present invention have been described in detail hereinabove, it should be clearly understood by an artisan of ordinary skill in the art that many variations and/or modifications of the basic inventive concepts herein taught may be made without departing from the scope of the present invention, as further defined by the appended claims.

## Claims

1. A method for transmitting update information of Electronic Service Guide, ESG, data in a Digital Video Broadcasting-Handheld, DVB-H, system, the method comprising the steps of:
detecting version of the ESG data which is to be transmitted; and
inserting the version of the ESG data in a predetermined table among tables configuring Program Specific Information/Service Information, PSI/SI, and transmitting the version of the ESG data included in the predetermined table.

2. The method as claimed in claim 1, wherein the predetermined table comprises any of a Program Association Table, PAT, a Program Map table, PMT, a NIT, Network Information Table, an Internet Protocol/MAC Notification Table, INT, and a Time and Date Table, TDT.

3. The method as claimed in claim 2, wherein the predetermined table comprises the PMT.

4. The method as claimed in claim 3, wherein the PMT includes a field in which the version of the ESG data is stored.

5. The method as claimed in claim 4, wherein the field in which the version of the ESG data is stored is included in a data broadcast id descriptor of the PMT.

6. The method as claimed in claim 5, wherein the field in which the version of the ESG data is stored comprises an ESG version information field.

7. A method for receiving update information of Electronic Service Guide, ESG, data in a Digital Video Broadcasting-Handheld, DVB-H, system, the method comprising the steps of:
(1) receiving Program Specific Information/Service Information, PSI/SI, protocoldata;
(2) analyzing the received PSI/SI protocol data, and detecting the version of the ESG data from the analyzed PSI/SI protocol data;
(3) comparing the detected version of the ESG data with version of ESG data detected from PSI/SI protocol data, which has already been received, in order to check if the information about the two versions is in accord with each other; and
(4) making connection with a transmission channel of the ESG data if the information about the two versions is not accord with each other, receiving the ESG data, and updating the received ESG data.

8. The method as claimed in claim 7, wherein step (2) further comprises detecting a version of the ESG data, which is included in a predetermined table among tables configuring the received PSI/SI data and is then transmitted.

9. The method as claimed in claim 8, wherein the predetermined table comprises any of a Program Association Table, PAT, a Program Map table, PMT, a NIT, Network Information Table, an Internet Protocol/MAC Notification Table, INT, and a Time and Date Table, TDT.

10. The method as claimed in claim 9, wherein the predetermined table further comprises the PMT.

11. The method as claimed in claim 10, wherein the PMT includes a field in which the version of the ESG data is stored.

12. The method as claimed in claim 11, wherein the field in which the version of the ESG data is stored is included in a data broadcast id descriptor of the PMT.

13. The method as claimed in claim 12, wherein the field in which the version of the ESG data is stored comprises an ESG version information field.

14. A system for transmitting/receiving update information of Electronic Service Guide, ESG, data in a Digital Video Broadcasting-Handheld, DVB-H, system, the system comprising:
a DVB-H system for detecting version of the ESG data which is to be transmitted, for inserting the version of the ESG data in a predetermined table among tables constructing Program Specific Information/Service Information, PSI/SI, data, and for transmitting the version of the ESG data included in the predetermined table; and
a DVB-H receiving terminal for receiving PSI/SI data and then analyzing the received PSI/SI data to detect the version of the ESG data from the analyzed PSI/SI data, for comparing the detected version of the ESG data with the version of ESG data detected from PSI/SI, which has been already received, in order to check if the two versions accord with each other, and for making connection with a transmission channel of the ESG data if the two versions do not accord with each other, to receive the ESG data, and then to update the received ESG data.

15. The system as claimed in claim 14, wherein the predetermined table comprises any of a Program Association Table, PAT, a Program Map table, PMT, a NIT, Network Information Table, an Internet Protocol/MAC Notification Table, INT, and a Time and Date Table, TDT.

16. The system as claimed in claim 15, wherein the predetermined table comprises the PMT.

17. The system as claimed in claim 16, wherein the PMT includes a field in which the version of the ESG data is stored.

18. The system as claimed in claim 17, wherein the field in which the version of the ESG data is stored is included in a data broadcast id descriptor of the PMT.

19. The system as claimed in claim 18, wherein the field in which the version of the ESG data is stored comprises an ESG version information field.
